# EUROPEAN PATENT SPECIFICATION

(11) **EP 4 481 554 B1**
(45) Date of publication and mention of the grant of the patent: **02.09.2026**
(21) Application number: 23180358.6
(22) Date of filing: 20.06.2023
(51) Int. Cl.: G06F 7/53, G06F 17/16

(54) **METHODS FOR DECOMPOSITION OF HIGH-PRECISION MATRIX MULTIPLICATIONS INTO MULTIPLE MATRIX MULTIPLICATIONS OF DIFFERENT DATA TYPES**
VERFAHREN ZUR ZERLEGUNG VON HOCHPRÄZISEN MATRIXMULTIPLIKATIONEN IN MEHRERE MATRIXMULTIPLIKATIONEN VERSCHIEDENER DATENTYPEN
PROCEDES DE DECOMPOSITION DE MULTIPLICATIONS MATRICIELLES DE HAUTE PRECISION EN MULTIPLICATIONS MATRICIELLES MULTIPLES DE DIFFERENTS TYPES DE DONNEES

(43) Date of publication of application: 25.12.2024
(73) Proprietor: Huawei Technologies Co., Ltd., Shenzhen, Guangdong 518129 (CN)
(72) Inventor: Cavigelli, Lukas, 80992 Munich (DE); Müller, Lorenz, 80992 Munich (DE); Andri, Renzo, 80992 Munich (DE)
(74) Representative: Pfenning, Meinig & Partner mbB

(56) References cited:
- EP-A1- 3 629 147
- US-A1- 2019 324 723
- US-A1- 2021 357 475

## Description

### TECHNICAL FIELD

The present disclosure relates, in general, to matrix multiplication. Aspects relate to decomposition of high-precision matrix multiplication into multiple matrix multiplications of different data types.

### BACKGROUND

In the field of artificial intelligence (AI), where multiple computations are required to implement an AI workload, an AI accelerator comprises a high-performance parallel computation machine that is specifically designed for the efficient processing of AI workloads, such as neural networks for example.

AI accelerators are primarily optimized for reduced-precision operands, such as those using half-precision binary floating-point number formats, truncated single-precision 32-bit floating-point number formats (e.g., bfloat), or integer number formats (e.g., signed integer numbers such as int8, int4) and so on. AI accelerators often provide a tensor processing unit (TPU), comprising specialized application-specific hardware, such as a tensor core/cube for such operands, or some form of vector processor, designed for a high volume of low precision computation (e.g. as little as 8-bit precision). However, such devices often need to fall back to a significantly slower processing unit for higher-precision operations.

Some AI related workloads have higher numerical precision requirements, and may see a degradation in the quality of the results (e.g., recommendations achieve a lower click-through rate) when deployed using lower precisions such as, e.g., float16 that cannot be overcome with simple solutions such as scaling or shifting the value ranges of the intermediate results and/or the trained/constant model parameters (e.g., weight matrixes).

Deep neural network (DNN) training scenarios can also require higher numerical precision, particularly for gradients and learned parameters, to converge with a similar number of compute/training iterations to the highest achievable quality of results (e.g., classification accuracy). Looking beyond AI/DNN-related applications, high performance computing (HPC) applications such as solvers, simulations and so on are commonly run with double-precision operations to meet target quality requirements, effectively barring access to many of the currently commercially available high-performance energy-efficient AI accelerators, or requiring to operate them in a higher precision mode at the cost of a vastly reduced throughput and higher power consumption.

### SUMMARY

An objective of the present disclosure is to provide an efficient method to perform higher-precision operations in devices, implementable in software or with minimal hardware modifications.

The foregoing and other objectives are achieved by the features of the independent claims.

Further implementation forms are apparent from the dependent claims, the description and the Figures.

A first aspect of the present disclosure provides a method for performing matrix multiplication using a mixed-precision decomposition of operands, the method comprising converting a first matrix comprising multiple elements at a first precision to a second matrix, wherein the second matrix comprises multiple elements at a second precision that is lower than the first precision, generating a first output matrix comprising a product of the second matrix and a third matrix, wherein the third matrix comprises multiple elements at the second precision, and wherein elements of the first output matrix are stored at or converted to the first precision, calculating a residue value matrix using the first matrix and the second matrix, wherein the residue value matrix comprises elements representing respective differences in values between elements of the first matrix and elements of the second matrix, scaling the elements of the residue value matrix using a first scaling factor to generate a first scaled matrix, wherein the first scaling factor is determined on the basis of absolute values of the elements of the residue value matrix, generating a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision, generating a fifth matrix from the element-wise quotient of the first intermediate matrix and the first scaling factor, calculating the product of the fifth matrix and the inverse of the second scaling factor to generate a second output matrix at the first precision, and generating a final output matrix at the first precision using the first output matrix and the second output matrix.

Accordingly, a high-precision (e.g., float32) matrix multiplication can be decomposed into multiple matrix multiplications of different data types (e.g., float16, int8 etc.). Multiple lower-precision data types allow the use of more energy-efficient or faster compute units. For example, some hardware can perform float16 operations 64x faster than float32 operations, and int8 operations 128x faster than float32 operations. This has a directly advantageous effect on memory bandwidth and required buffer sizes for efficient processing, proportionally to the data types chosen for each matrix multiplication operation.

In an implementation of the first aspect, the method can further comprise generating a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix.

In an example, the method can further comprise determining the element-wise quotient of the second intermediate matrix and the third scaling factor to generate a third intermediate matrix, and calculating the product of the third intermediate matrix and the inverse of the fourth scaling factor to generate a third output matrix at the first precision, and generating a final output matrix at the first precision using the first output matrix, the second output matrix and the third output matrix. The first precision can comprise at least one of a single-precision, a double-precision, or a quadruple-precision floating-point format precision, and/or the second precision can comprise at least one of a single-precision, or a half-precision floating-point format precision, and/or the third precision can comprise at least one of a half-precision floating-point format precision, or an integer format precision.

The method can further comprise pre-scaling the first matrix and/or the second matrix using a predetermined fixed scaling factor or using a scaling factor determined on the basis of a distribution of values of elements of the first matrix and/or the second matrix. The method can further comprise determining a first maximum value from the moduli of the elements of the residue value matrix, and generating the first scaling factor using the first maximum value. The method can further comprise determining a second maximum value from the moduli of the elements of the second matrix at the first precision, and generating the second scaling factor using the second maximum value.

A second aspect of the present disclosure provides an apparatus for performing matrix multiplication using a mixed-precision decomposition of operands, the apparatus comprising a processor, and a memory coupled to the processor, the memory comprising instructions which, when executed by the processor, cause the apparatus to convert a first matrix comprising multiple elements at a first precision to a second matrix, wherein the second matrix comprises multiple elements at a second precision that is lower than the first precision, generate a first output matrix comprising a product of the second matrix and a third matrix, wherein the third matrix comprises multiple elements at the second precision, and wherein elements of the first output matrix are stored at or converted to the first precision, calculate a residue value matrix using the first matrix and the second matrix, wherein the residue value matrix comprises elements representing respective differences in values between elements of the first matrix and elements of the second matrix, scale the elements of the residue value matrix using a first scaling factor to generate a first scaled matrix, wherein the first scaling factor is determined on the basis of absolute values of the elements of the residue value matrix, generate a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision, generate a fifth matrix from the element-wise quotient of the first intermediate matrix and the first scaling factor, calculate the product of the fifth matrix and the inverse of the second scaling factor to generate a second output matrix at the first precision, and generate a final output matrix at the first precision using the first output matrix and the second output matrix.

In an implementation of the second aspect the memory can further comprise instructions, which, when executed by the processor, cause the apparatus to generate a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix. The memory can further comprise instructions, which, when executed by the processor, cause the apparatus to determine the element-wise quotient of the second intermediate matrix and the third scaling factor to generate a third intermediate matrix, and calculate the product of the third intermediate matrix and the inverse of the fourth scaling factor to generate a third output matrix at the first precision, and generate a final output matrix at the first precision using the first output matrix, the second output matrix and the third output matrix. The memory can further comprise instructions, which, when executed by the processor, cause the apparatus to pre-scale the first matrix and/or the second matrix using a predetermined fixed scaling factor or using a scaling factor determined on the basis of a distribution of values of elements of the first matrix and/or the second matrix.

A third aspect of the present disclosure provides a machine-readable storage medium comprising instructions for performing matrix multiplication using a mixed-precision decomposition of operands, the instructions executable by a processor of an apparatus, whereby to cause the apparatus to convert a first matrix comprising multiple elements at a first precision to a second matrix, wherein the second matrix comprises multiple elements at a second precision that is lower than the first precision, generate a first output matrix comprising a product of the second matrix and a third matrix, wherein the third matrix comprises multiple elements at the second precision, and wherein elements of the first output matrix are stored at or converted to the first precision, calculate a residue value matrix using the first matrix and the second matrix, wherein the residue value matrix comprises elements representing respective differences in values between elements of the first matrix and elements of the second matrix, scale the elements of the residue value matrix using a first scaling factor to generate a first scaled matrix, wherein the first scaling factor is determined on the basis of absolute values of the elements of the residue value matrix, generate a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision, generate a fifth matrix from the element-wise quotient of the first intermediate matrix and the first scaling factor, calculate the product of the fifth matrix and the inverse of the second scaling factor to generate a second output matrix at the first precision, and generate a final output matrix at the first precision using the first output matrix and the second output matrix.

In an implementation of the third aspect, the machine-readable storage medium can further comprise instructions executable by the processor of the apparatus, whereby to cause the apparatus to generate a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix. The machine-readable storage medium can further comprise instructions executable by the processor of the apparatus, whereby to cause the apparatus to determine the element-wise quotient of the second intermediate matrix and the third scaling factor to generate a third intermediate matrix, and calculate the product of the third intermediate matrix and the inverse of the fourth scaling factor to generate a third output matrix at the first precision, and generate a final output matrix at the first precision using the first output matrix, the second output matrix and the third output matrix. The machine-readable storage medium can further comprise instructions executable by the processor of the apparatus, whereby to cause the apparatus to pre-scale the first matrix and/or the second matrix using a predetermined fixed scaling factor or using a scaling factor determined on the basis of a distribution of values of elements of the first matrix and/or the second matrix.

These and other aspects of the invention will be apparent from the embodiment(s) described below.

### BRIEF DESCRIPTION OF THE DRAWINGS

In order that the present disclosure may be more readily understood, embodiments will now be described, by way of example, with reference to the accompanying drawings, in which:
Figure 1 is a schematic representation of a method for performing matrix multiplication using a mixed-precision decomposition of operands, according to an example;
Figure 2 is a schematic representation of a machine according to an example; and
Figure 3 is a flowchart of a method for performing matrix multiplication using a mixed-precision decomposition of operands, according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

According to an example, high-precision matrix multiplications are performed using lower-precision compute units. That is, a high-precision matrix multiplication can be decomposed into multiple lower-precision matrix multiplications (MatMuls) of different data types. Values can be scaled dependent on the input data and some operations can be performed with even lower precision (e.g., full precision format is float32, reduced precision is float16, strongly reduced precision format is int8).

This enables compute effort to be further reduced, and thus to achieve a higher throughput.

According to an example, a high-precision matrix multiplication (data type "HP") can be decomposed into two or more lower-precision matrix multiplications data types (data types "LP1", "LP2") and the results can be stored in an accumulation data type ("AP"). Thus, high-precision matrixes can be converted to LP1-type and a normal MatMul can be performed, keeping the results in AP-type. The first input matrix is then used to compute a quantization residual which, in an example, comprises the difference between its HP and LP1 representations. This quantization residual is then stored back in HP. The quantization residual is scaled based on its value distributions (e.g., the largest absolute value in the matrix) to match a suitable value range for representation in LP2 and it is converted to the selected data type (e.g., LP2). A second input matrix (not its residual) is converted to LP2-type after scaling with its own scaling factor in HP. The two matrixes are multiplied and the result is converted to AP-type and scaled with the inverse of the product of the two scaling factors. The resulting matrix is added to the previously computed MatMul result of the LP1-type matrixes. The residual computation can be repeated with interchanged input matrixes and also added to the final result.

Methods for performing matrix multiplication using a mixed-precision decomposition of operands can be implemented on an AI accelerator device or a GPU that has, e.g., a strongly different throughput for computing matrix multiplications of different data types (e.g., Huawei's Ascend devices, or Nvidia and AMD's GPUs). Typically, such accelerator devices have memory/RAM to store/load inputs and outputs, and potentially intermediate results. One application scenario of such devices is to run AI models on them. These models comprise sequences of processing steps for which, typically, a numerical precision of float16 or int8 is sufficient and can be run on the high throughput matrix multiplication units available for these data types. Some processing steps in some models require higher precision. These can pose a challenge as either no unit is capable to perform the computation in sufficient precision or the unit(s) provide very low throughput. In such a scenario, the present method can be applied, replacing a high-precision matrix multiplication with multiple operations of the highthroughput, low-precision units.

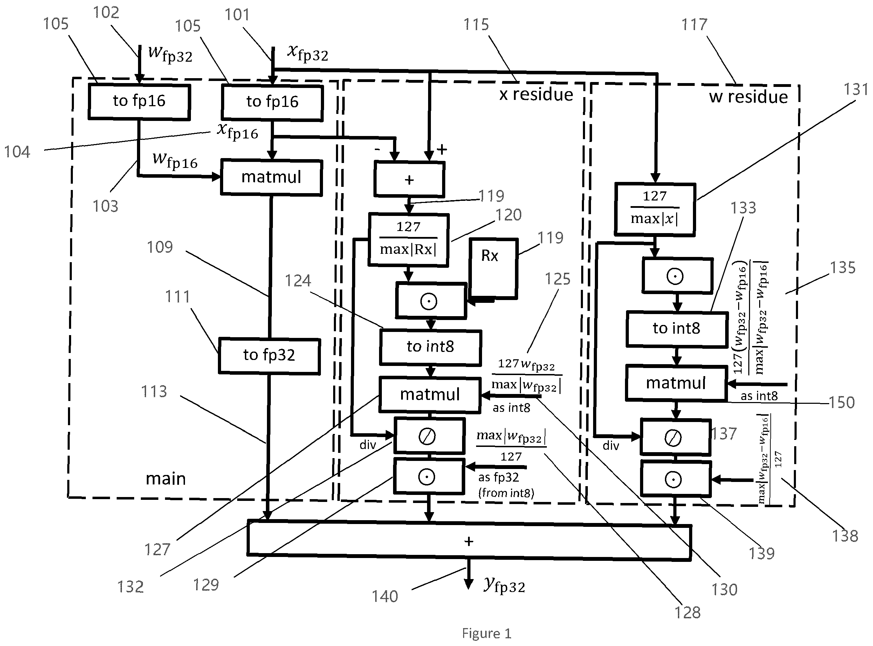

Figure 1 is a schematic representation of a method for performing matrix multiplication using a mixed-precision decomposition of operands. In the example of figure 1, a first matrix, 101 (comprising an operand) is provided in a first precision. Matrix 101 is converted 105 into a second matrix 104 at a second precision, wherein the second precision is a lower-precision format version (e.g., float16) compared to the first precision (e.g., float32). Accordingly, matrix *x*_{fp16} (104) is provided. A third matrix, *w*_{fp16} (103) is provided. The third matrix 103 can be a lower-precision version of a matrix 102. For example, matrix 102 can be provided at the first precision, and matrix 103 can be provided at the second precision.

The product 109 of the second matrix 104 and the third matrix 103 is computed and the result is converted 111 to or stored in a higher precision format (e.g., float32) 113 (and referred to herein as *Y_{X̃}_{W̃}*), such as the first precision.

According to an example, residues *R_{X}* = *x* - *x*_{fp16}; *R_{W}* = *w* - *w*_{fp16} can be calculated (as depicted in 115). For the x residue, *R_{X}*, the second matrix 104 (forming the lower-precision version of x, i.e., *x*_{fp16}) is subtracted 119 from the first matrix 101 (i.e., the full or higher precision version). The x residue, *R_{X}*, is also scaled using a first scaling factor *α_{X}* 120. In an example, *αₓ* can be a fixed scaling factor or computed based on *R_{X}*. The scaling factor *α_{X}* 120 comprises a value determined on the basis of absolute values of the elements of the residue value matrix. In the example of figure 1, the (scalar) scaling factor *α_{X}* 120 is determined on the basis of a maximum value of elements of the residue matrix Rx 119 along with a factor (in this specific case: 127). In the example of figure 1, the value of 127 is used to match the value range of the int8 data type.

Elements of the residue value matrix 119 are scaled using the first scaling factor 120 to generate a first scaled matrix 124 (e.g., int8 in the example of figure 1), also referred to as matrix *Q_{XX}.* That is, with reference to figure 1, matrix *Q_{XX}* 124 is calculated from the element-wise product of Rx 119 and the scaling factor 120.

A first intermediate matrix 127 is generated by calculating the element-wise product of the first scaled matrix 124 using a fourth matrix 130. The fourth matrix 130 is determined using matrix 102 (i.e., the higher-precision version of the third matrix 103) that has been scaled using a second scaling factor 125. The second scaling factor *β_{X}* 125 is determined on the basis of absolute values of the elements of the matrix 102. In the example of figure 1, the second scaling factor *βₓ* 125 is determined on the basis of a maximum value of elements of the second matrix at the first precision 102 along with a factor (in this specific case: 127). The x refers to this being the residual in x, but it is applied to the matrix w.

A fifth matrix 132 is generated from the element-wise quotient of the first intermediate matrix 127 and the first scaling factor 120. The product of the fifth matrix 132 and the inverse of the second scaling factor 125 is calculated to generate a second output matrix 129 at the first precision. That is, the fifth matrix 132 is then scaled with the inverse of the second scaling factor 128 and quantized to the first precision (i.e., the higher-precision format) (e.g., float32) to obtain the second output matrix *Y_{R_{XW}} 129.*

A similar process (depicted in 117) can be followed to determine a residue in relation to the matrix 102. For the w residue, *R_{w}*, the matrix 101 (i.e., *x*_{fp32}), is scaled using a scaling factor 131. In an example, the scaling factor 131 comprises the inverse of a maximum value of the moduli of the elements of the first matrix 101 at the first precision. A numerical value (in this case 127) is provided as part of the scaling factor 131 that is based (as in the case of 120 in section 115) on the desired precision of the result of the scaling. That is, in the example of figure 1, a lower-precision format (e.g., int8 in the example of figure 1) fifth matrix 133 is calculated from the element-wise product of matrix 101 and the scaling factor 131.

A matrix multiplication is performed using the fifth matrix 133 and a lower-precision format matrix 135 (also referred to as a sixth matrix) to generate a second intermediate matrix 150. In the example of figure 1, the lower-precision sixth matrix 135 is calculated from the quotient of the difference between values of elements in the matrix 102 and the matrix 103, and a maximum value determined from the moduli of the difference between values of elements in the matrix 102 and the matrix 103. As before, a numerical factor (in this case 127) can be applied.

A third intermediate matrix 137 is calculated from the element-wise quotient of the second intermediate matrix 150 and the scaling factor 131. The third intermediate matrix 137 is then scaled using the inverse 138 of the scaling factor described above with reference to matrix 135 to produce a third output matrix 139 (*Y_{R_{WX}}*). A final output matrix at the first precision is the sum of *Y_{X̃}_{W̃}* and *Y_{R_{XW}}* and optionally *Y_{R_{WX}}.*

According to an example different data type combinations can be used. That is, a first precision, a second precision, a third precision and so on, representing e.g., higher-precision formats and/or a lower-precision formats. For example, the first precision can comprise at least one of a single-precision, a double-precision, or a quadruple-precision floating-point format precision, and/or the second precision can comprise at least one of a single-precision, or a half-precision floating-point format precision, and/or the third precision can comprise at least one of a half-precision floating-point format precision, or an integer format precision. Reference to a numerical value and/or a result and/or a matrix (and/or any one or more of its elements) in a higher-precision format refers to a precision format that can store data to a higher degree of accuracy and/or which has a higher dynamic range of numeric values than that of a lower-precision format. For example, float32 is a higher-precision format compared to float16, int8 and int32, whereas float32 is a lower-precision format than float64, and so on.

In an implementation the reduced-precision data type as described above can be used to storing a result representing a noisy measurement, potentially in the same data format as a higher precision operation, where hereby lower-precision operation can be computed using an analog matrix multiplication device and the high-precision operation can be executed with, e.g., a digital circuit or a higher-precision mode of the analog matrix multiplication device.

According to an example, the method described above with reference to figure 1 can be extended with additional residual MatMuls (e.g., *R_{W}* · *R_{X}*) or residuals of residuals (e.g., with *R_{R_{W}}* terms). Furthermore, some partial results/steps can be precomputed or re-used across multiple MatMul operations (e.g., all values and matrixes depending only on *W*). In a similar vein, the method can be applied independently to tiles of a matrix, potentially re-using partial results across different tiles.

According to an example, first and/or second and/or third scaling factors and so on can comprise e.g., a fixed value, a current maximum absolute value, a historic average of the maximum absolute value. The value range of input matrices can be first pre-scaled based on a fixed factor or based on the value distributions to avoid overflow, and the result can be scaled inversely after applying the method as described above.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a converter for converting one precision format to another, such as float32 to float16 and so on, and/or a module for performing a matrix multiplication, and/or a module for applying a scaling factor to a matrix) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

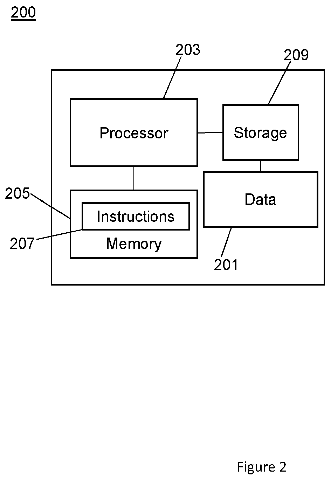

Figure 2 is a schematic representation of a machine according to an example. The machine 200 can be, e.g., a system or apparatus, user equipment, or part thereof, or a low-level lightweight state machine inside an AI accelerator or processor. The machine 200 comprises a processor 203, and a memory 205 to store instructions 202, executable by the processor 203. The machine comprises a storage 209 that can be used to store data 201 representing matrices and/or the values of their elements, scaling factors and so on as described above with reference to figure 1 for example.

The instructions 207, executable by the processor 203, can cause the machine 200 to convert a first matrix comprising multiple elements at a first precision to a second matrix, wherein the second matrix comprises multiple elements at a second precision that is lower than the first precision, generate a first output matrix comprising a product of the second matrix and a third matrix, wherein the third matrix comprises multiple elements at the second precision, and wherein elements of the first output matrix are stored at or converted to the first precision, calculate a residue value matrix using the first matrix and the second matrix, wherein the residue value matrix comprises elements representing respective differences in values between elements of the first matrix and elements of the second matrix, scale the elements of the residue value matrix using a first scaling factor to generate a first scaled matrix, wherein the first scaling factor is determined on the basis of absolute values of the elements of the residue value matrix, generate a first intermediate matrix by calculating the element-wise product of the first scaled matrix using a fourth matrix, wherein the fourth matrix is determined using a version of the third matrix at the first precision that has been scaled using a second scaling factor, wherein the second scaling factor is determined on the basis of absolute values of the elements of the third matrix at the first precision, generate a fifth matrix from the element-wise quotient of the first intermediate matrix and the first scaling factor, calculate the product of the fifth matrix and the inverse of the second scaling factor to generate a second output matrix at the first precision, and generate a final output matrix at the first precision using the first output matrix and the second output matrix.

Accordingly, the machine 200 can implement a method for performing matrix multiplication using a mixed-precision decomposition of operands.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

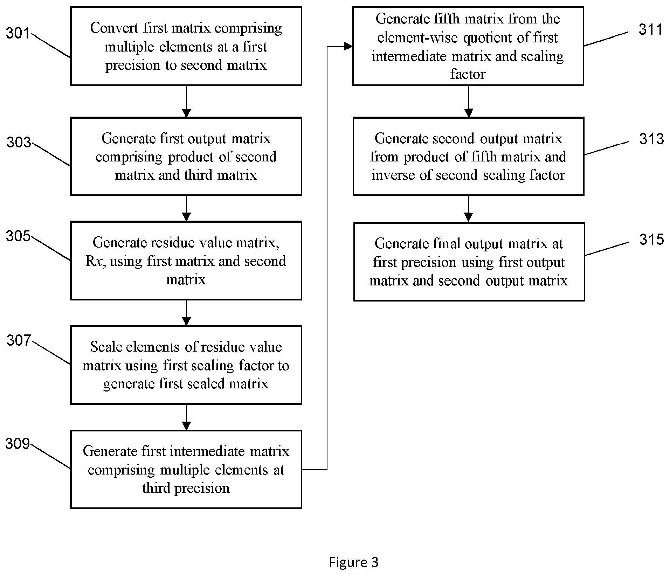

Figure 3 is as schematic representation of a method for performing matrix multiplication using a mixed-precision decomposition of operands, according to an example. In block 301 a first matrix 101 comprising multiple elements at a first precision is converted to a second matrix 104, wherein the second matrix 104 comprises multiple elements at a second precision that is lower than the first precision. In an example, the matrix 102, comprising multiple elements at a first precision can be converted to a third matrix 103, wherein the third matrix 103 comprises multiple elements at a second precision that is lower than the first precision.

In block 303 a first output matrix comprising a product of the second matrix 104 and the third matrix 103 is generated. The third matrix 103 comprises multiple elements at the second precision, and elements of the first output matrix are stored at or converted (111) to the first precision to provide the first output matrix 113 at the first precision.

In block 305 a residue value matrix, Rx 119, is generated using the first matrix 101 and the second matrix 104. The residue value matrix comprises elements representing respective differences in values between elements of the first matrix 101 and elements of the second matrix 104.

In block 307, the elements of the residue value matrix are scaled using a first scaling factor 120 to generate a first scaled matrix 124, wherein the first scaling factor 120 is determined on the basis of absolute values of the elements of the residue value matrix. The elements of the first scaled matrix 124 are thus provided, by means of the scaling factor 120, at a third precision. In an example, the third precision is a lower precision than or the same as the second precision. In an example, the first scaled matrix 124 can comprise a lower-precision format matrix 130 (e.g., int8).

In block 309, a first intermediate matrix 127 is generated by calculating the element-wise product of the first scaled matrix 124 and a fourth matrix 130, wherein the fourth matrix 130 is determined using a version of the third matrix at the first precision that has been scaled using a second scaling factor 125, wherein the second scaling factor 125 is determined on the basis of absolute values of the elements of the third matrix at the first precision.

In block 311, an fifth matrix 132 is generated from the element-wise quotient of the first intermediate matrix 127 and the scaling factor 120.

In block 313 the product 129 of the fifth matrix 132 and the inverse 128 of the second scaling factor 125 is calculated to generate a second output matrix 129 at the first precision.

In block 315, a final output matrix 140 is generated at the first precision using the first output matrix 113 and the second output matrix 129. In an example, individual elements of the final output matrix 140 comprise the sums of corresponding elements of the first output matrix 113 and the second output matrix 129.

According to an example, final output matrix 140 can be generated at the first precision using the first output matrix 113, the second output matrix 129 and the third output matrix 139. In an example, individual elements of the final output matrix 140 can comprise the sums of corresponding elements of the first output matrix 113, the second output matrix 129 and the third output matrix 139.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

## Claims

1. A method for performing matrix multiplication using a mixed-precision decomposition of operands executed by an apparatus, the method comprising:
converting a first matrix comprising multiple elements at a first precision to a second matrix, wherein the second matrix comprises multiple elements at a second precision that is lower than the first precision;
generating a first output matrix comprising a product of the second matrix and a third matrix, wherein the third matrix comprises multiple elements at the second precision, and wherein elements of the first output matrix are stored at or converted to the first precision;
calculating a residue value matrix using the first matrix and the second matrix, wherein the residue value matrix comprises elements representing respective differences in values between elements of the first matrix and elements of the second matrix;
scaling the elements of the residue value matrix using a first scaling factor to generate a first scaled matrix, wherein the first scaling factor is determined on the basis of absolute values of the elements of the residue value matrix;
generating a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision;
generating a fifth matrix from the element-wise quotient of the first intermediate matrix and the first scaling factor;
calculating the product of the fifth matrix and the inverse of the second scaling factor to generate a second output matrix at the first precision; and
generating a final output matrix at the first precision using the first output matrix and the second output matrix.

2. The method as claimed in claim 1, further comprising:
generating a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix.

3. The method as claimed in claim 2, further comprising:
determining the element-wise quotient of the second intermediate matrix and the third scaling factor to generate a third intermediate matrix; and
calculating the product of the third intermediate matrix and the inverse of the fourth scaling factor to generate a third output matrix at the first precision; and
generating a final output matrix at the first precision using the first output matrix, the second output matrix and the third output matrix.

4. The method as claimed in any preceding claim, wherein the first precision comprises at least one of a single-precision, a double-precision, or a quadruple-precision floating-point format precision, and/or wherein the second precision comprises at least one of a single-precision, or a half-precision floating-point format precision, and/or wherein the third precision comprises at least one of a half-precision floating-point format precision, or an integer format precision.

5. The method as claimed in any preceding claim, further comprising:
pre-scaling the first matrix and/or the second matrix using a predetermined fixed scaling factor or using a scaling factor determined on the basis of a distribution of values of elements of the first matrix and/or the second matrix.

6. The method as claimed in any preceding claim, further comprising:
determining a first maximum value from the moduli of the elements of the residue value matrix; and
generating the first scaling factor using the first maximum value.

7. The method as claimed in any preceding claim, further comprising:
determining a second maximum value from the moduli of the elements of the second matrix at the first precision; and
generating the second scaling factor using the second maximum value.

8. Apparatus for performing matrix multiplication using a mixed-precision decomposition of operands, the apparatus comprising a processor, and a memory coupled to the processor, the memory comprising instructions which, when executed by the processor, cause the apparatus to:
convert a first matrix comprising multiple elements at a first precision to a second matrix, wherein the second matrix comprises multiple elements at a second precision that is lower than the first precision;
generate a first output matrix comprising a product of the second matrix and a third matrix, wherein the third matrix comprises multiple elements at the second precision, and wherein elements of the first output matrix are stored at or converted to the first precision;
calculate a residue value matrix using the first matrix and the second matrix, wherein the residue value matrix comprises elements representing respective differences in values between elements of the first matrix and elements of the second matrix;
scale the elements of the residue value matrix using a first scaling factor to generate a first scaled matrix, wherein the first scaling factor is determined on the basis of absolute values of the elements of the residue value matrix;
generate a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision;
generate a fifth matrix from the element-wise quotient of the first intermediate matrix and the first scaling factor;
calculate the product of the fifth matrix and the inverse of the second scaling factor to generate a second output matrix at the first precision; and
generate a final output matrix at the first precision using the first output matrix and the second output matrix.

9. The apparatus as claimed in claim 8, wherein the memory further comprises instructions, which, when executed by the processor, cause the apparatus to:
generate a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix.

10. The apparatus as claimed in claim 9, wherein the memory further comprises instructions, which, when executed by the processor, cause the apparatus to:
determine the element-wise quotient of the second intermediate matrix and the third scaling factor to generate a third intermediate matrix; and
calculate the product of the third intermediate matrix and the inverse of the fourth scaling factor to generate a third output matrix at the first precision; and
generate a final output matrix at the first precision using the first output matrix, the second output matrix and the third output matrix.

11. The apparatus as claimed in any of claims 8 to 10, wherein the memory further comprises instructions, which, when executed by the processor, cause the apparatus to:
pre-scale the first matrix and/or the second matrix using a predetermined fixed scaling factor or using a scaling factor determined on the basis of a distribution of values of elements of the first matrix and/or the second matrix.

12. A machine-readable storage medium comprising instructions for performing matrix multiplication using a mixed-precision decomposition of operands, the instructions executable by a processor of an apparatus, whereby to cause the apparatus to:
convert a first matrix comprising multiple elements at a first precision to a second matrix, wherein the second matrix comprises multiple elements at a second precision that is lower than the first precision;
generate a first output matrix comprising a product of the second matrix and a third matrix, wherein the third matrix comprises multiple elements at the second precision, and wherein elements of the first output matrix are stored at or converted to the first precision;
calculate a residue value matrix using the first matrix and the second matrix, wherein the residue value matrix comprises elements representing respective differences in values between elements of the first matrix and elements of the second matrix;
scale the elements of the residue value matrix using a first scaling factor to generate a first scaled matrix, wherein the first scaling factor is determined on the basis of absolute values of the elements of the residue value matrix;
generate a first intermediate matrix by calculating the element-wise product of the first scaled matrix and a fourth matrix, wherein the fourth matrix is determined using a version of the third matrix at the first precision that has been scaled using a second scaling factor, wherein the second scaling factor is determined on the basis of absolute values of the elements of the third matrix at the first precision;
generate a fifth matrix from the element-wise quotient of the first intermediate matrix and the first scaling factor;
calculate the product of the fifth matrix and the inverse of the second scaling factor to generate a second output matrix at the first precision; and
generate a final output matrix at the first precision using the first output matrix and the second output matrix.

13. The machine-readable storage medium as claimed in claim 12, further comprising instructions executable by the processor of the apparatus, whereby to cause the apparatus to:
generate a second intermediate matrix by calculating the element-wise product of a fifth matrix and a sixth matrix, wherein the fifth matrix is determined using a version of first matrix that has been scaled using a third scaling factor, wherein the third scaling factor is determined on the basis of a maximum of the absolute values of elements of the first matrix, and wherein the sixth matrix comprises: elements determined on the basis of the element-wise difference between the third matrix at the first precision and the third matrix, wherein elements determined on the basis of the element-wise difference between the third matrix at the first precision and the third matrix are scaled using a fourth scaling factor, wherein the fourth scaling factor is determined on the basis of absolute values of the differences between elements of the third matrix at the first precision and elements of the third matrix.

14. The machine-readable storage medium as claimed in claim 12 or 13, further comprising instructions executable by the processor of the apparatus, whereby to cause the apparatus to:
determine the element-wise quotient of the second intermediate matrix and the third scaling factor to generate a third intermediate matrix; and
calculate the product of the third intermediate matrix and the inverse of the fourth scaling factor to generate a third output matrix at the first precision; and
generate a final output matrix at the first precision using the first output matrix, the second output matrix and the third output matrix.

15. The machine-readable storage medium as claimed in any of claims 12 to 14, further comprising instructions executable by the processor of the apparatus, whereby to cause the apparatus to:
pre-scale the first matrix and/or the second matrix using a predetermined fixed scaling factor or using a scaling factor determined on the basis of a distribution of values of elements of the first matrix and/or the second matrix.

## Patentansprüche

1. Verfahren zum Durchführen einer Matrixmultiplikation unter Verwendung einer Zerlegung gemischter Präzision von Operanden, die durch eine Einrichtung ausgeführt wird, wobei das Verfahren umfasst:
Umwandeln einer ersten Matrix, die mehrere Elemente bei einer ersten Präzision umfasst, in eine zweite Matrix, wobei die zweite Matrix mehrere Elemente bei einer zweiten Präzision, die niedriger als die erste Präzision ist, umfasst;
Erzeugen einer ersten Ausgabematrix, die ein Produkt der zweiten Matrix und einer dritten Matrix umfasst, wobei die dritte Matrix mehrere Elemente bei der zweiten Präzision umfasst und wobei Elemente der ersten Ausgabematrix bei der ersten Präzision gespeichert oder in sie umgewandelt werden;
Berechnen einer Restwertmatrix unter Verwendung der ersten Matrix und der zweiten Matrix, wobei die Restwertmatrix Elemente, die jeweilige Differenzen in Werten zwischen Elementen der ersten Matrix und Elementen der zweiten Matrix darstellen, umfasst;
Skalieren der Elemente der Restwertmatrix unter Verwendung eines ersten Skalierungsfaktors, um eine erste skalierte Matrix zu erzeugen, wobei der erste Skalierungsfaktor auf der Basis von Absolutwerten der Elemente der Restwertmatrix bestimmt wird;
Erzeugen einer ersten Zwischenmatrix durch Berechnen des elementweisen Produkts der ersten skalierten Matrix und einer vierten Matrix, wobei die vierte Matrix unter Verwendung einer Version der dritten Matrix bei der ersten Präzision, die unter Verwendung eines zweiten Skalierungsfaktors skaliert wurde, bestimmt wird, wobei der zweite Skalierungsfaktor auf der Basis von Absolutwerten der Elemente der dritten Matrix bei der ersten Präzision bestimmt wird;
Erzeugen einer fünften Matrix aus dem elementweisen Quotienten der ersten Zwischenmatrix und des ersten Skalierungsfaktors;
Berechnen des Produkts der fünften Matrix und der Inverse des zweiten Skalierungsfaktors, um eine zweite Ausgabematrix bei der ersten Präzision zu erzeugen; und
Erzeugen einer finalen Ausgabematrix bei der ersten Präzision unter Verwendung der ersten Ausgabematrix und der zweiten Ausgabematrix.

2. Verfahren nach Anspruch 1, das ferner umfasst:
Erzeugen einer zweiten Zwischenmatrix durch Berechnen des elementweisen Produkts einer fünften Matrix und einer sechsten Matrix, wobei die fünfte Matrix unter Verwendung einer Version der ersten Matrix, die unter Verwendung eines dritten Skalierungsfaktors skaliert wurde, bestimmt wird, wobei der dritte Skalierungsfaktor auf der Basis eines Maximums der Absolutwerte von Elementen der ersten Matrix bestimmt wird und wobei die sechste Matrix umfasst: Elemente, die auf der Basis der elementweisen Differenz zwischen der dritten Matrix bei der ersten Präzision und der dritten Matrix bestimmt werden, wobei Elemente, die auf der Basis der elementweisen Differenz zwischen der dritten Matrix bei der ersten Präzision und der dritten Matrix bestimmt werden, unter Verwendung eines vierten Skalierungsfaktors skaliert werden, wobei der vierte Skalierungsfaktor auf der Basis von Absolutwerten der Differenzen zwischen Elementen der dritten Matrix bei der ersten Präzision und Elementen der dritten Matrix bestimmt wird.

3. Verfahren nach Anspruch 2, das ferner umfasst:
Bestimmen des elementweisen Quotienten der zweiten Zwischenmatrix und des dritten Skalierungsfaktors, um eine dritte Zwischenmatrix zu erzeugen; und
Berechnen des Produkts der dritten Zwischenmatrix und der Inverse des vierten Skalierungsfaktors, um eine dritte Ausgabematrix bei der ersten Präzision zu erzeugen; und
Erzeugen einer finalen Ausgabematrix bei der ersten Präzision unter Verwendung der ersten Ausgabematrix, der zweiten Ausgabematrix und der dritten Ausgabematrix.

4. Verfahren nach einem der vorstehenden Ansprüche, wobei die erste Präzision mindestens eine aus einer Einfachpräzision-, einer Doppelpräzision- oder einer Vierfachpräzision-Gleitkommaformat-Präzision umfasst und/oder wobei die zweite Präzision mindestens eine aus einer Einfachpräzision- oder einer Halbpräzision-Gleitkommaformat-Präzision umfasst und/oder wobei die dritte Präzision mindestens eine aus einer Halbpräzision-Gleitkommaformat-Präzision oder einer Ganzzahlformat-Präzision umfasst.

5. Verfahren nach einem der vorstehenden Ansprüche, das ferner umfasst:
Vorskalieren der ersten Matrix und/oder der zweiten Matrix unter Verwendung eines vorbestimmten festen Skalierungsfaktors oder unter Verwendung eines Skalierungsfaktors, der auf der Basis einer Verteilung von Werten von Elementen der ersten Matrix und/oder der zweiten Matrix bestimmt wird.

6. Verfahren nach einem der vorstehenden Ansprüche, das ferner umfasst:
Bestimmen eines ersten Maximalwerts aus den Beträgen der Elemente der Restwertmatrix; und
Erzeugen des ersten Skalierungsfaktors unter Verwendung des ersten Maximalwerts.

7. Verfahren nach einem der vorstehenden Ansprüche, das ferner umfasst:
Bestimmen eines zweiten Maximalwerts aus den Beträgen der Elemente der zweiten Matrix bei der ersten Präzision; und
Erzeugen des zweiten Skalierungsfaktors unter Verwendung des zweiten Maximalwerts.

8. Einrichtung zum Durchführen der Matrixmultiplikation unter Verwendung einer Zerlegung gemischter Präzision von Operanden, wobei die Einrichtung einen Prozessor und einen Speicher, der an den Prozessor gekoppelt ist, umfasst, wobei der Speicher Anweisungen umfasst, die, wenn sie durch den Prozessor ausgeführt werden, die Einrichtung veranlassen zum:
Umwandeln einer ersten Matrix, die mehrere Elemente bei einer ersten Präzision umfasst, in eine zweite Matrix, wobei die zweite Matrix mehrere Elemente bei einer zweiten Präzision, die niedriger als die erste Präzision ist, umfasst;
Erzeugen einer ersten Ausgabematrix, die ein Produkt der zweiten Matrix und einer dritten Matrix umfasst, wobei die dritte Matrix mehrere Elemente bei der zweiten Präzision umfasst und wobei Elemente der ersten Ausgabematrix bei der ersten Präzision gespeichert oder in sie umgewandelt werden;
Berechnen einer Restwertmatrix unter Verwendung der ersten Matrix und der zweiten Matrix, wobei die Restwertmatrix Elemente, die jeweilige Differenzen in Werten zwischen Elementen der ersten Matrix und Elementen der zweiten Matrix darstellen, umfasst;
Skalieren der Elemente der Restwertmatrix unter Verwendung eines ersten Skalierungsfaktors, um eine erste skalierte Matrix zu erzeugen, wobei der erste Skalierungsfaktor auf der Basis von Absolutwerten der Elemente der Restwertmatrix bestimmt wird;
Erzeugen einer ersten Zwischenmatrix durch Berechnen des elementweisen Produkts der ersten skalierten Matrix und einer vierten Matrix, wobei die vierte Matrix unter Verwendung einer Version der dritten Matrix bei der ersten Präzision, die unter Verwendung eines zweiten Skalierungsfaktors skaliert wurde, bestimmt wird, wobei der zweite Skalierungsfaktor auf der Basis von Absolutwerten der Elemente der dritten Matrix bei der ersten Präzision bestimmt wird;
Erzeugen einer fünften Matrix aus dem elementweisen Quotienten der ersten Zwischenmatrix und des ersten Skalierungsfaktors;
Berechnen des Produkts der fünften Matrix und der Inverse des zweiten Skalierungsfaktors, um eine zweite Ausgabematrix bei der ersten Präzision zu erzeugen; und
Erzeugen einer finalen Ausgabematrix bei der ersten Präzision unter Verwendung der ersten Ausgabematrix und der zweiten Ausgabematrix.

9. Einrichtung nach Anspruch 8, wobei der Speicher ferner Anweisungen umfasst, die, wenn sie durch den Prozessor ausgeführt werden, die Einrichtung veranlassen zum: Erzeugen einer zweiten Zwischenmatrix durch Berechnen des elementweisen Produkts einer fünften Matrix und einer sechsten Matrix, wobei die fünfte Matrix unter Verwendung einer Version der ersten Matrix, die unter Verwendung eines dritten Skalierungsfaktors skaliert wurde, bestimmt wird, wobei der dritte Skalierungsfaktor auf der Basis eines Maximums der Absolutwerte von Elementen der ersten Matrix bestimmt wird und wobei die sechste Matrix umfasst: Elemente, die auf der Basis der elementweisen Differenz zwischen der dritten Matrix bei der ersten Präzision und der dritten Matrix bestimmt werden, wobei Elemente, die auf der Basis der elementweisen Differenz zwischen der dritten Matrix bei der ersten Präzision und der dritten Matrix bestimmt werden, unter Verwendung eines vierten Skalierungsfaktors skaliert werden, wobei der vierte Skalierungsfaktor auf der Basis von Absolutwerten der Differenzen zwischen Elementen der dritten Matrix bei der ersten Präzision und Elementen der dritten Matrix bestimmt wird.

10. Einrichtung nach Anspruch 9, wobei der Speicher ferner Anweisungen umfasst, die, wenn sie durch den Prozessor ausgeführt werden, die Einrichtung veranlassen zum:
Bestimmen des elementweisen Quotienten der zweiten Zwischenmatrix und des dritten Skalierungsfaktors, um eine dritte Zwischenmatrix zu erzeugen; und
Berechnen des Produkts der dritten Zwischenmatrix und der Inverse des vierten Skalierungsfaktors, um eine dritte Ausgabematrix bei der ersten Präzision zu erzeugen; und
Erzeugen einer finalen Ausgabematrix bei der ersten Präzision unter Verwendung der ersten Ausgabematrix, der zweiten Ausgabematrix und der dritten Ausgabematrix.

11. Einrichtung nach einem der Ansprüche 8 bis 10, wobei der Speicher ferner Anweisungen umfasst, die, wenn sie durch den Prozessor ausgeführt werden, die Einrichtung veranlassen zum:
Vorskalieren der ersten Matrix und/oder der zweiten Matrix unter Verwendung eines vorbestimmten festen Skalierungsfaktors oder unter Verwendung eines Skalierungsfaktors, der auf der Basis einer Verteilung von Werten von Elementen der ersten Matrix und/oder der zweiten Matrix bestimmt wird.

12. Maschinenlesbares Speichermedium, das Anweisungen zum Durchführen der Matrixmultiplikation unter Verwendung einer Zerlegung gemischter Präzision von Operanden umfasst, wobei die Anweisungen durch einen Prozessor einer Einrichtung ausführbar sind, wodurch die Einrichtung veranlasst wird zum:
Umwandeln einer ersten Matrix, die mehrere Elemente bei einer ersten Präzision umfasst, in eine zweite Matrix, wobei die zweite Matrix mehrere Elemente bei einer zweiten Präzision, die niedriger als die erste Präzision ist, umfasst;
Erzeugen einer ersten Ausgabematrix, die ein Produkt der zweiten Matrix und einer dritten Matrix umfasst, wobei die dritte Matrix mehrere Elemente bei der zweiten Präzision umfasst und wobei Elemente der ersten Ausgabematrix bei der ersten Präzision gespeichert oder in sie umgewandelt werden;
Berechnen einer Restwertmatrix unter Verwendung der ersten Matrix und der zweiten Matrix, wobei die Restwertmatrix Elemente, die jeweilige Differenzen in Werten zwischen Elementen der ersten Matrix und Elementen der zweiten Matrix darstellen, umfasst;
Skalieren der Elemente der Restwertmatrix unter Verwendung eines ersten Skalierungsfaktors, um eine erste skalierte Matrix zu erzeugen, wobei der erste Skalierungsfaktor auf der Basis von Absolutwerten der Elemente der Restwertmatrix bestimmt wird;
Erzeugen einer ersten Zwischenmatrix durch Berechnen des elementweisen Produkts der ersten skalierten Matrix und einer vierten Matrix, wobei die vierte Matrix unter Verwendung einer Version der dritten Matrix bei der ersten Präzision, die unter Verwendung eines zweiten Skalierungsfaktors skaliert wurde, bestimmt wird, wobei der zweite Skalierungsfaktor auf der Basis von Absolutwerten der Elemente der dritten Matrix bei der ersten Präzision bestimmt wird;
Erzeugen einer fünften Matrix aus dem elementweisen Quotienten der ersten Zwischenmatrix und des ersten Skalierungsfaktors;
Berechnen des Produkts der fünften Matrix und der Inverse des zweiten Skalierungsfaktors, um eine zweite Ausgabematrix bei der ersten Präzision zu erzeugen; und
Erzeugen einer finalen Ausgabematrix bei der ersten Präzision unter Verwendung der ersten Ausgabematrix und der zweiten Ausgabematrix.

13. Maschinenlesbares Speichermedium nach Anspruch 12, das ferner Anweisungen, die durch den Prozessor der Einrichtung ausführbar sind, umfasst, wodurch die Einrichtung veranlasst wird zum:
Erzeugen einer zweiten Zwischenmatrix durch Berechnen des elementweisen Produkts einer fünften Matrix und einer sechsten Matrix, wobei die fünfte Matrix unter Verwendung einer Version der ersten Matrix, die unter Verwendung eines dritten Skalierungsfaktors skaliert wurde, bestimmt wird, wobei der dritte Skalierungsfaktor auf der Basis eines Maximums der Absolutwerte von Elementen der ersten Matrix bestimmt wird und wobei die sechste Matrix umfasst: Elemente, die auf der Basis der elementweisen Differenz zwischen der dritten Matrix bei der ersten Präzision und der dritten Matrix bestimmt werden, wobei Elemente, die auf der Basis der elementweisen Differenz zwischen der dritten Matrix bei der ersten Präzision und der dritten Matrix bestimmt werden, unter Verwendung eines vierten Skalierungsfaktors skaliert werden, wobei der vierte Skalierungsfaktor auf der Basis von Absolutwerten der Differenzen zwischen Elementen der dritten Matrix bei der ersten Präzision und Elementen der dritten Matrix bestimmt wird.

14. Maschinenlesbares Speichermedium nach Anspruch 12 oder 13, das ferner Anweisungen, die durch den Prozessor der Einrichtung ausführbar sind, umfasst, wodurch die Einrichtung veranlasst wird zum:
Bestimmen des elementweisen Quotienten der zweiten Zwischenmatrix und des dritten Skalierungsfaktors, um eine dritte Zwischenmatrix zu erzeugen; und
Berechnen des Produkts der dritten Zwischenmatrix und der Inverse des vierten Skalierungsfaktors, um eine dritte Ausgabematrix bei der ersten Präzision zu erzeugen; und
Erzeugen einer finalen Ausgabematrix bei der ersten Präzision unter Verwendung der ersten Ausgabematrix, der zweiten Ausgabematrix und der dritten Ausgabematrix.

15. Maschinenlesbares Speichermedium nach einem der Ansprüche 12 bis 14, das ferner Anweisungen, die durch den Prozessor der Einrichtung ausführbar sind, umfasst, wodurch die Einrichtung veranlasst wird zum:
Vorskalieren der ersten Matrix und/oder der zweiten Matrix unter Verwendung eines vorbestimmten festen Skalierungsfaktors oder unter Verwendung eines Skalierungsfaktors, der auf der Basis einer Verteilung von Werten von Elementen der ersten Matrix und/oder der zweiten Matrix bestimmt wird.

## Revendications

1. Procédé permettant de réaliser une multiplication matricielle à l'aide d'une décomposition de précision mixte d'opérandes exécutée par un appareil, le procédé comprenant :
la conversion d'une première matrice comprenant de multiples éléments à une première précision en une deuxième matrice, dans lequel la deuxième matrice comprend de multiples éléments à une deuxième précision qui est inférieure à la première précision ;
la génération d'une première matrice de sortie comprenant un produit de la deuxième matrice et d'une troisième matrice, dans lequel la troisième matrice comprend de multiples éléments à la deuxième précision, et dans lequel des éléments de la première matrice de sortie sont stockés à la première précision ou convertis à celle-ci ;
le calcul d'une matrice de valeurs résiduelles à l'aide de la première matrice et de la deuxième matrice, dans lequel la matrice de valeurs résiduelles comprend des éléments représentant des différences respectives de valeurs entre des éléments de la première matrice et des éléments de la deuxième matrice ;
la mise à l'échelle des éléments de la matrice de valeurs résiduelles à l'aide d'un premier facteur d'échelle pour générer une première matrice mise à l'échelle, dans lequel le premier facteur d'échelle est déterminé sur la base de valeurs absolues des éléments de la matrice de valeurs résiduelles ;
la génération d'une première matrice intermédiaire en calculant le produit par élément de la première matrice mise à l'échelle et d'une quatrième matrice, dans lequel la quatrième matrice est déterminée à l'aide d'une version de la troisième matrice à la première précision qui a été mise à l'échelle à l'aide d'un deuxième facteur d'échelle, dans lequel le deuxième facteur d'échelle est déterminé sur la base de valeurs absolues des éléments de la troisième matrice à la première précision ;
la génération d'une cinquième matrice à partir du quotient par élément de la première matrice intermédiaire et du premier facteur d'échelle ;
le calcul du produit de la cinquième matrice et de l'inverse du deuxième facteur d'échelle pour générer une deuxième matrice de sortie à la première précision ; et
la génération d'une matrice de sortie finale à la première précision à l'aide de la première matrice de sortie et de la deuxième matrice de sortie.

2. Procédé selon la revendication 1, comprenant en outre :
la génération d'une deuxième matrice intermédiaire en calculant le produit par élément d'une cinquième matrice et d'une sixième matrice, dans lequel la cinquième matrice est déterminée à l'aide d'une version de première matrice qui a été mise à l'échelle à l'aide d'un troisième facteur d'échelle, dans lequel le troisième facteur d'échelle est déterminé sur la base d'un maximum des valeurs absolues d'éléments de la première matrice, et dans lequel la sixième matrice comprend : des éléments déterminés sur la base de la différence par élément entre la troisième matrice à la première précision et la troisième matrice, dans lequel des éléments déterminés sur la base de la différence par élément entre la troisième matrice à la première précision et la troisième matrice sont mis à l'échelle à l'aide d'un quatrième facteur d'échelle, dans lequel le quatrième facteur d'échelle est déterminé sur la base de valeurs absolues des différences entre des éléments de la troisième matrice à la première précision et des éléments de la troisième matrice.

3. Procédé selon la revendication 2, comprenant en outre :
la détermination du quotient par élément de la deuxième matrice intermédiaire et du troisième facteur d'échelle pour générer une troisième matrice intermédiaire ; et
le calcul du produit de la troisième matrice intermédiaire et de l'inverse du quatrième facteur d'échelle pour générer une troisième matrice de sortie à la première précision ; et
la génération d'une matrice de sortie finale à la première précision à l'aide de la première matrice de sortie, de la deuxième matrice de sortie et de la troisième matrice de sortie.

4. Procédé selon l'une quelconque revendication précédente, dans lequel la première précision comprend au moins l'une parmi une précision de format à virgule flottante simple précision, double précision ou quadruple-précision, et/ou dans lequel la deuxième précision comprend au moins l'une parmi une précision de format à virgule flottante simple précision ou demi-précision, et/ou dans lequel la troisième précision comprend au moins l'une parmi une précision de format à virgule flottante de demi-précision ou une précision de format entier.

5. Procédé selon l'une quelconque revendication précédente, comprenant en outre :
la mise à l'échelle préalable de la première matrice et/ou de la deuxième matrice à l'aide d'un facteur d'échelle fixe prédéterminé ou à l'aide d'un facteur d'échelle déterminé sur la base d'une distribution de valeurs d'éléments de la première matrice et/ou de la deuxième matrice.

6. Procédé selon l'une quelconque revendication précédente, comprenant en outre :
la détermination d'une première valeur maximale à partir des modules des éléments de la matrice de valeurs résiduelles ; et
la génération du premier facteur d'échelle à l'aide de la première valeur maximale.

7. Procédé selon l'une quelconque revendication précédente, comprenant en outre :
la détermination d'une seconde valeur maximale à partir des modules des éléments de la deuxième matrice à la première précision ; et
la génération du deuxième facteur d'échelle à l'aide de la seconde valeur maximale.

8. Appareil permettant de réaliser une multiplication matricielle à l'aide d'une décomposition de précision mixte d'opérandes, l'appareil comprenant un processeur, et une mémoire couplée au processeur, la mémoire comprenant des instructions qui, lorsqu'elles sont exécutées par le processeur, amènent l'appareil à :
convertir une première matrice comprenant de multiples éléments à une première précision en une deuxième matrice, dans lequel la deuxième matrice comprend de multiples éléments à une deuxième précision qui est inférieure à la première précision ;
générer une première matrice de sortie comprenant un produit de la deuxième matrice et d'une troisième matrice, dans lequel la troisième matrice comprend de multiples éléments à la deuxième précision, et dans lequel des éléments de la première matrice de sortie sont stockés à la première précision ou convertis à celle-ci ;
calculer une matrice de valeurs résiduelles à l'aide de la première matrice et de la deuxième matrice, dans lequel la matrice de valeurs résiduelles comprend des éléments représentant des différences respectives de valeurs entre des éléments de la première matrice et des éléments de la deuxième matrice ;
mettre à l'échelle les éléments de la matrice de valeurs résiduelles à l'aide d'un premier facteur d'échelle pour générer une première matrice mise à l'échelle, dans lequel le premier facteur d'échelle est déterminé sur la base de valeurs absolues des éléments de la matrice de valeurs résiduelles ;
générer une première matrice intermédiaire en calculant le produit par élément de la première matrice mise à l'échelle et d'une quatrième matrice, dans lequel la quatrième matrice est déterminée à l'aide d'une version de la troisième matrice à la première précision qui a été mise à l'échelle à l'aide d'un deuxième facteur d'échelle, dans lequel le deuxième facteur d'échelle est déterminé sur la base de valeurs absolues des éléments de la troisième matrice à la première précision ;
générer une cinquième matrice à partir du quotient par élément de la première matrice intermédiaire et du premier facteur d'échelle ;
calculer le produit de la cinquième matrice et de l'inverse du deuxième facteur d'échelle pour générer une deuxième matrice de sortie à la première précision ; et
générer une matrice de sortie finale à la première précision à l'aide de la première matrice de sortie et de la deuxième matrice de sortie.

9. Appareil selon la revendication 8, dans lequel la mémoire comprend en outre des instructions qui, lorsqu'elles sont exécutées par le processeur, amènent l'appareil à : générer une deuxième matrice intermédiaire en calculant le produit par élément d'une cinquième matrice et d'une sixième matrice, dans lequel la cinquième matrice est déterminée à l'aide d'une version de première matrice qui a été mise à l'échelle à l'aide d'un troisième facteur d'échelle, dans lequel le troisième facteur d'échelle est déterminé sur la base d'un maximum des valeurs absolues d'éléments de la première matrice, et dans lequel la sixième matrice comprend : des éléments déterminés sur la base de la différence par élément entre la troisième matrice à la première précision et la troisième matrice, dans lequel des éléments déterminés sur la base de la différence par élément entre la troisième matrice à la première précision et la troisième matrice sont mis à l'échelle à l'aide d'un quatrième facteur d'échelle, dans lequel le quatrième facteur d'échelle est déterminé sur la base de valeurs absolues des différences entre des éléments de la troisième matrice à la première précision et des éléments de la troisième matrice.

10. Appareil selon la revendication 9, dans lequel la mémoire comprend en outre des instructions qui, lorsqu'elles sont exécutées par le processeur, amènent l'appareil à :
déterminer le quotient par élément de la deuxième matrice intermédiaire et du troisième facteur d'échelle pour générer une troisième matrice intermédiaire ; et
calculer le produit de la troisième matrice intermédiaire et de l'inverse du quatrième facteur d'échelle pour générer une troisième matrice de sortie à la première précision ; et
générer une matrice de sortie finale à la première précision à l'aide de la première matrice de sortie, de la deuxième matrice de sortie et de la troisième matrice de sortie.

11. Appareil selon l'une quelconque des revendications 8 à 10, dans lequel la mémoire comprend en outre des instructions qui, lorsqu'elles sont exécutées par le processeur, amènent l'appareil à :
mettre à l'échelle au préalable la première matrice et/ou la deuxième matrice à l'aide d'un facteur d'échelle fixe prédéterminé ou à l'aide d'un facteur d'échelle déterminé sur la base d'une distribution de valeurs d'éléments de la première matrice et/ou de la deuxième matrice.

12. Support de stockage lisible par machine comprenant des instructions pour réaliser une multiplication matricielle à l'aide d'une décomposition de précision mixte d'opérandes, les instructions étant exécutables par un processeur d'un appareil, moyennant quoi elles amènent l'appareil à :
convertir une première matrice comprenant de multiples éléments à une première précision en une deuxième matrice, dans lequel la deuxième matrice comprend de multiples éléments à une deuxième précision qui est inférieure à la première précision ;
générer une première matrice de sortie comprenant un produit de la deuxième matrice et d'une troisième matrice, dans lequel la troisième matrice comprend de multiples éléments à la deuxième précision, et dans lequel des éléments de la première matrice de sortie sont stockés à la première précision ou convertis à celle-ci ;
calculer une matrice de valeurs résiduelles à l'aide de la première matrice et de la deuxième matrice, dans lequel la matrice de valeurs résiduelles comprend des éléments représentant des différences respectives de valeurs entre des éléments de la première matrice et des éléments de la deuxième matrice ;
mettre à l'échelle les éléments de la matrice de valeurs résiduelles à l'aide d'un premier facteur d'échelle pour générer une première matrice mise à l'échelle, dans lequel le premier facteur d'échelle est déterminé sur la base de valeurs absolues des éléments de la matrice de valeurs résiduelles ;
générer une première matrice intermédiaire en calculant le produit par élément de la première matrice mise à l'échelle et d'une quatrième matrice, dans lequel la quatrième matrice est déterminée à l'aide d'une version de la troisième matrice à la première précision qui a été mise à l'échelle à l'aide d'un deuxième facteur d'échelle, dans lequel le deuxième facteur d'échelle est déterminé sur la base de valeurs absolues des éléments de la troisième matrice à la première précision ;
générer une cinquième matrice à partir du quotient par élément de la première matrice intermédiaire et du premier facteur d'échelle ;
calculer le produit de la cinquième matrice et de l'inverse du deuxième facteur d'échelle pour générer une deuxième matrice de sortie à la première précision ; et
générer une matrice de sortie finale à la première précision à l'aide de la première matrice de sortie et de la deuxième matrice de sortie.

13. Support de stockage lisible par machine selon la revendication 12, comprenant en outre des instructions exécutables par le processeur de l'appareil, moyennant quoi elles amènent l'appareil à :
générer une deuxième matrice intermédiaire en calculant le produit par élément d'une cinquième matrice et d'une sixième matrice, dans lequel la cinquième matrice est déterminée à l'aide d'une version de première matrice qui a été mise à l'échelle à l'aide d'un troisième facteur d'échelle, dans lequel le troisième facteur d'échelle est déterminé sur la base d'un maximum des valeurs absolues d'éléments de la première matrice, et dans lequel la sixième matrice comprend : des éléments déterminés sur la base de la différence par élément entre la troisième matrice à la première précision et la troisième matrice, dans lequel des éléments déterminés sur la base de la différence par élément entre la troisième matrice à la première précision et la troisième matrice sont mis à l'échelle à l'aide d'un quatrième facteur d'échelle, dans lequel le quatrième facteur d'échelle est déterminé sur la base de valeurs absolues des différences entre des éléments de la troisième matrice à la première précision et des éléments de la troisième matrice.

14. Support de stockage lisible par machine selon la revendication 12 ou 13, comprenant en outre des instructions exécutables par le processeur de l'appareil, moyennant quoi elles amènent l'appareil à :
déterminer le quotient par élément de la deuxième matrice intermédiaire et du troisième facteur d'échelle pour générer une troisième matrice intermédiaire ; et
calculer le produit de la troisième matrice intermédiaire et de l'inverse du quatrième facteur d'échelle pour générer une troisième matrice de sortie à la première précision ; et
générer une matrice de sortie finale à la première précision à l'aide de la première matrice de sortie, de la deuxième matrice de sortie et de la troisième matrice de sortie.

15. Support de stockage lisible par machine selon l'une quelconque des revendications 12 à 14, comprenant en outre des instructions exécutables par le processeur de l'appareil, moyennant quoi elles amènent l'appareil à :
mettre à l'échelle au préalable la première matrice et/ou la deuxième matrice à l'aide d'un facteur d'échelle fixe prédéterminé ou à l'aide d'un facteur d'échelle déterminé sur la base d'une distribution de valeurs d'éléments de la première matrice et/ou de la deuxième matrice.
